# EUROPEAN PATENT APPLICATION

(11) **EP 2 124 137 A1**
(43) Date of publication of application: **25.11.2009**
(21) Application number: 08721557.0
(22) Date of filing: 07.03.2008
(51) Int. Cl.: G06F 3/041

(54) **PROTECTION PANEL HAVING TOUCH INPUT FUNCTION FOR ELECTRONIC DEVICE DISPLAY WINDOW**

(30) Priority: 09.03.2007 JP 2007061105
(71) Applicant: NISSHA PRINTING CO., LTD., Nakagyo-ku Kyoto-shi Kyoto 604-8551 (JP)
(72) Inventor: NISHIKAWA, Kazuhiro, Kyoto-shi Kyoto 604-8551 (JP); HASHIMOTO, Takao, Kyoto-shi Kyoto 604-8551 (JP); KAI, Yoshihiro, Kyoto-shi Kyoto 604-8551 (JP); SUNAHASE, Takakuni, Kyoto-shi Kyoto 604-8551 (JP); NAKAMURA, Kazuto, Kyoto-shi Kyoto 604-8551 (JP)
(74) Representative: HOFFMANN EITLE
(86) International application number: PCT/JP2008/054139
(87) International publication number: WO 2008/111505

(57) **Abstract**

A protective panel (1) with a touch input function for an electronic apparatus display window is adapted to be fitted into a panel fitting section (19a) of a casing (19) having an opening without a gap so as to be held therein such that the outside surface thereof forms the same plane, with a display (20) disposed the panel below being protected in such a manner as to be visually recognized from the outside through a transparent window portion (18), wherein a fine concave/convex portion (22) is partly formed on the surface of a hard coat layer (24).

## Description

### Technical Field

The present invention relates to a protective panel with a touch input function for a display window of an electronic apparatus that is used for various applications such as portable information terminals, such as PDAs and handy terminals, office automation equipment, such as copying machines and facsimiles, as well as smart phones, cell phones, cameras, portable game apparatuses, electronic dictionaries, car navigation systems, small-size personal computers, and various home electronics, and that has an outside surface having a high additional value that has not been achieved by a conventional protective panel with a touch input function.

### Background Art

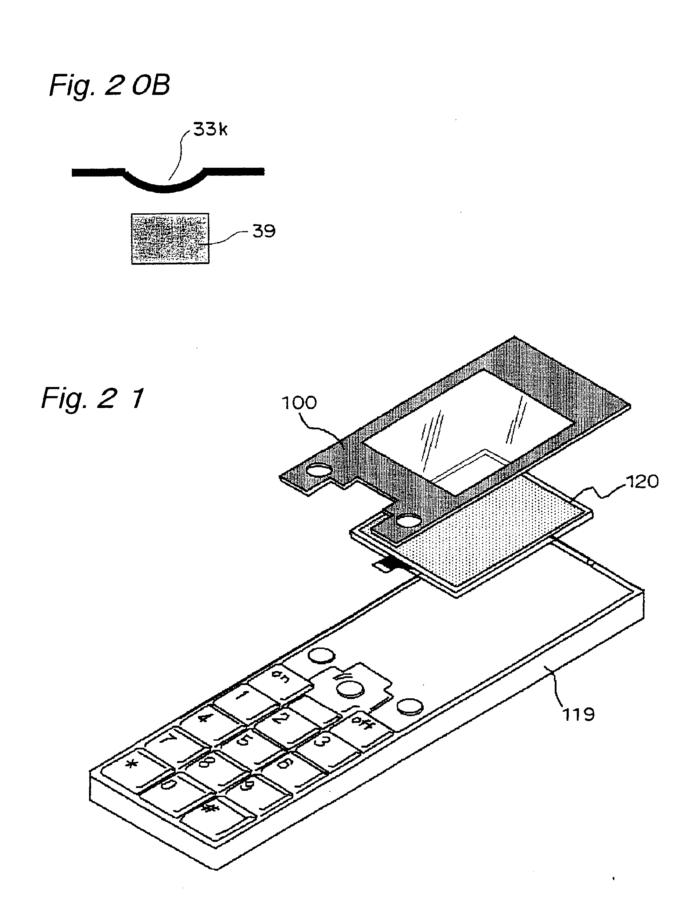

A casing for use in an electronic apparatus, such as a cell phone and a smart phone, is generally constructed by combining a front face casing and a back face casing made of a synthetic resin. More specifically, as shown in Fig. 21, a protective panel 100 is secured onto the surface of the front face casing by using a fusing process or the like so as to protect a display window of a display 120 such as an LCD. Conventionally, a colorless transparent resin panel has been used as this protective panel 100; however, together with demands for fashionable electronic apparatuses, a decoration, such as trimming, has come to be applied thereto by printing.

Moreover, in recent years, in cell phones, a protective panel 101 having an input device function added to the protective panel 100, as shown in Fig. 21, is expected to be a next-generation interface, and such a panel is disclosed in, for example, Patent Document 1.

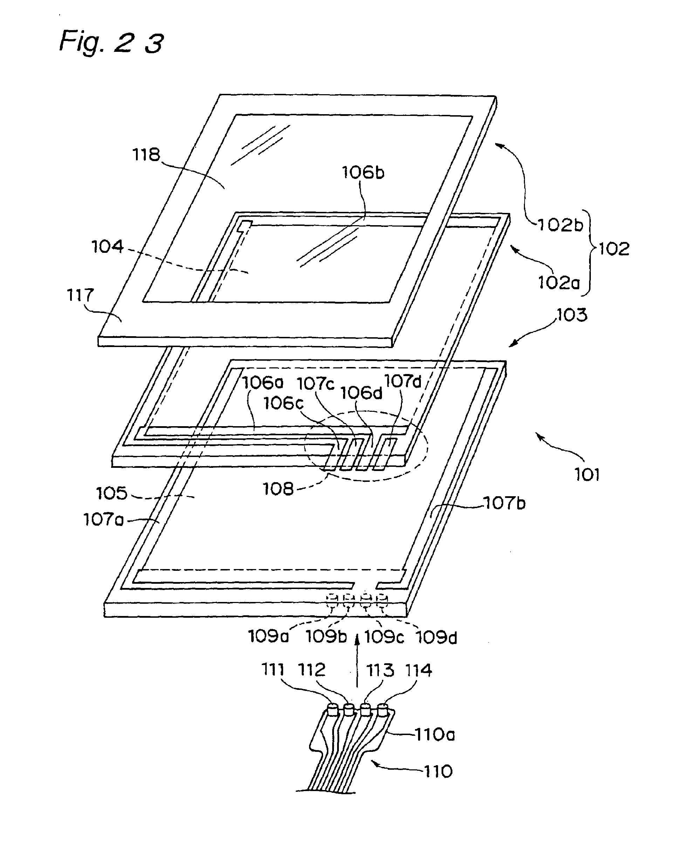

Referring to an exploded view in Fig. 23, the protective panel 101 with a touch input function for an electronic apparatus display window will be described in further detail. In Fig. 23, the protective panel 101 with a touch input function for an electronic apparatus display window includes a lower electrode panel 103 having a lower transparent electrode 105 and lower circuits 107a and 107b formed on the periphery of the lower transparent electrode 105, which are formed on the upper face of a non-flexible protective panel main body, an upper electrode sheet 102a having an upper transparent electrode 104 formed at a position opposing the lower transparent electrode 105 and upper circuits 106a to 106d, 107c, and 107d formed on the periphery of the upper transparent electrode 104, which are formed on the lower face of a flexible transparent insulating film, and a decorative sheet 102b having a decorative layer forming a transparent window portion 118 by concealing the lower circuits 107a and 107b and the upper circuits 106a to 106d, 107c, and 107d with a pattern layer 117, which are formed on a flexible transparent insulating film.

On the inner faces of the upper electrode sheet 102a and the lower electrode panel 103, ITO (indium-tin oxide) or the like is formed into a rectangular shape by sputtering or vacuum deposition as the respective transparent electrodes 104 and 105. On the upper electrode sheet 102a, belt-shaped bus bars 106a and 106b, connected to the transparent electrode 104 and made of silver paste, are formed in parallel with each other, and on the lower electrode panel 103, belt-shaped bus bars 107a and 107b, connected to the transparent electrode 105 and made of silver paste, are formed in a direction orthogonal to the bus bars 106a and 106b. The bus bars 106a, 106b, 107a, and 107b have their circuits extended to a connection portion 108 formed at an edge portion of the upper electrode sheet 102a and gathered into one portion.

The decorative sheet 102b is bonded to the entire front face of the upper electrode sheet 102a (hereinafter, the entire portion of the upper electrode sheet 102a and the sheet laminated on the surface thereof is referred to as a movable sheet 102), and upon pressing the surface of the decorative sheet 102b with a finger, a pen, or the like, the movable sheet 102 is integrally warped downward, with the result that the respective transparent electrodes 104 and 105, formed on the inner faces of the upper electrode sheet 102a and the lower electrode panel 103, are made in contact with each other so that an input position is detected.

In Fig. 23, unlike the protective panel 101 with a touch input function for an electronic apparatus display window described in Patent Document 1, through holes 109a to 109d are formed on the lower electrode panel 103 in parallel with each other in a Z direction in association with the respective electrode ends 106c, 107c, 106d, and 107d in the connection portion 108. Moreover, in association with these through holes 109a to 109d, four metal pins 111 to 114 are stood on the connection-side end portion 110a of an FPC (flexible printed circuit board) 110 so as to protrude therefrom, and the metal pins 111 to 114 are allowed to conduct to the electrode ends 106c, 107c, 106d, and 107d through a conductive adhesive (not shown). This FPC connecting method from the rear face of the lower electrode panel 103 is disclosed in Patent Document 2.
Patent Document 1: WO 2005/064451 A1
Patent Document 2: WO 2006/077784 A1

### Disclosure Of Invention

### Subject to be solved by the Invention

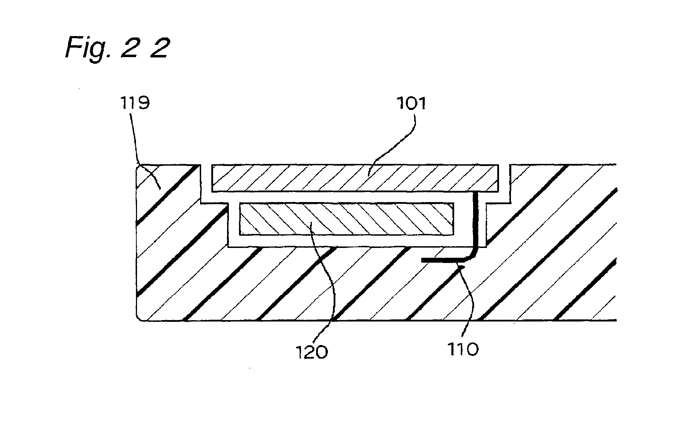

The protective panel 101 with a touch input function for an electronic apparatus display window is adapted to be fitted into a panel fitting section of a casing 119 without a gap to be held so that its touch input face (outside surface) forms the same plane (see Fig. 22), forming an important element of the product surface as the surface of the casing 119; however, in Patent Documents 1 and 2, this face is simply subjected to a hard coating treatment or a low-reflection treatment over the entire face thereof, and the outside surface is poor in an additional value.

In view of the above-mentioned issues with the background art, the object of the present invention is to provide a protective panel with a touch input function for an electronic apparatus display window that has an outside surface with a high additional value that has not been achieved by a conventional protective panel with a touch input function.

### Means for solving the Subject

In order to achieve the above-mentioned object, the present invention has the following structures:
According to a first aspect of the present invention, there is provided a protective panel with a touch input function for an electronic apparatus display window, comprising:
   a lower electrode panel having, on an upper face of a non-flexible protective panel main body, a lower transparent electrode and a lower circuit arranged on a periphery of the lower transparent electrode;
   an upper electrode sheet having, on a lower face of a flexible transparent insulating film, an upper transparent electrode arranged on a position opposite the lower transparent electrode and an upper circuit arranged on a periphery of the upper transparent electrode, with the upper electrode sheet being bonded to the lower electrode panel at peripheral portions thereof to form a gap between the electrodes;
   a decorative sheet that has, on at least one of faces of a flexible transparent insulating film, a decorative layer provided with a concealing portion for concealing the lower circuit and the upper circuit and a transparent window portion surrounded by the concealing portion, the decorative sheet being bonded to an upper face of the upper electrode sheet;
   a hard coat film having a hard coat layer arranged on an upper face of a flexible transparent insulating film, with a lower face of the transparent insulating film being bonded to an upper face of the decorative sheet; and
   a fine concave/convex portion that is partly formed on a surface of the hard coat layer.

According to a second aspect of the present invention, there is provided the protective panel with a touch input function for an electronic apparatus display window according to the first aspect, wherein the fine concave/convex portion corresponds to a mat portion prepared by forming the surface of the hard coat layer into a mat state.

According to a third aspect of the present invention, there is provided the protective panel with a touch input function for an electronic apparatus display window according to the first aspect, wherein the fine concave/convex portion corresponds to a concave or convex portion for use as a home position, formed on the surface of the hard coat layer.

According to a fourth aspect of the present invention, there is provided the protective panel with a touch input function for an electronic apparatus display window according to the first aspect, wherein the fine concave/convex portion corresponds to a concave or convex portion for use as a determination key, formed on the surface of the hard coat layer.

According to a fifth aspect of the present invention, there is provided the protective panel with a touch input function for an electronic apparatus display window according to the first aspect, wherein the fine concave/convex portion corresponds to a concave portion for preventing erroneous input, formed on the surface of the hard coat layer.

According to a sixth aspect of the present invention, there is provided the protective panel with a touch input function for an electronic apparatus display window according to the first aspect, wherein the fine concave/convex portion corresponds to a concave or convex portion for use as a scroll bar portion, formed on the surface of the hard coat layer.

According to a seventh aspect of the present invention, there is provided the protective panel with a touch input function for an electronic apparatus display window according to the first aspect, wherein the fine concave/convex portion corresponds to a concave or convex portion for slide-opening operation of a portable apparatus, formed on the surface of the hard coat layer.

According to an eighth aspect of the present invention, there is provided the protective panel with a touch input function for an electronic apparatus display window according to the first aspect, wherein the fine concave/convex portion corresponds to a protrusion for use as a lens of a camera, formed on the surface of the hard coat layer.

According to a ninth aspect of the present invention, there is provided the protective panel with a touch input function for an electronic apparatus display window according to the first aspect, wherein the fine concave/convex portion corresponds to a concave portion for preventing scratches on a lens of a camera, formed on the surface of the hard coat layer.

According to a tenth aspect of the present invention, there is provided the protective panel with a touch input function for an electronic apparatus display window according to any one of the first to ninth aspects, wherein the hard coat layer has a film thickness in a range from 7 µm to 50 µm.

According to an 11th aspect of the present invention, there is provided the protective panel with a touch input function for an electronic apparatus display window according to any one of the first to ninth aspects, the panel being adapted to be fitted into a panel fitting section of a casing having an opening to be held such that the surface of the hard coat layer forms a same plane as a surface of the casing, the panel protectingly constructing a display capable of being disposed below the panel in such a manner as to be visually recognized from an outside thereof through the transparent window portion.

According to a 12th aspect of the present invention, there is provided an electronic apparatus in which: the protective panel with a touch input function for an electronic apparatus display window according to any one of the first to ninth aspects, is adapted to be fitted into a panel fitting section of a casing having an opening to be held such that the surface of the hard coat layer, the surface corresponding to an outer surface of the protective panel, forms a same plane as a surface of the casing, the display disposed below the panel being protected in such a manner as to be visually recognized from an outside thereof through the opening of the casing and the transparent window portion of the protective panel.

### Effects of the Invention

In accordance with the present invention, since the fine concave/convex portion is partly formed on the surface of the hard coat layer corresponding to the outermost face, it is possible to provide an outside surface with a high additional value that has not been achieved by a conventional protective panel with a touch input function. For example, by partly carrying out a matting process on the surface of the hard coat layer, it is possible to provide high-quality feeling/touch from a design point of view, or by arranging the fine concave/convex portion to be used, e.g., as a home position, for reliable input on a determination key, for prevention of erroneous input, as a scroll bar, for slide opening operation for a portable apparatus, as a camera lens, or for prevention of scratches on a camera lens, on the surface of the hard coat layer, it becomes possible to achieve various functions.

### Brief Description Of Drawings

These and other aspects and features of the present invention will become clear from the following description taken in conjunction with the preferred embodiments thereof with reference to the accompanying drawings, in which:
Fig. 1 is an exploded perspective view showing a structure of a protective panel with a touch input function for an electronic apparatus display window in accordance with one embodiment of the present invention;
Fig. 2 is a cross-sectional view showing one working example of a hard coat film to be used for the protective panel with a touch input function for an electronic apparatus display window in accordance with the embodiment of the present invention;
Fig. 3 is an exploded perspective view showing a state in which the protective panel with a touch input function for an electronic apparatus display window in accordance with the embodiment of the present invention is fitted into a panel fitting section of a casing together with a display to be held therein so that an electronic apparatus is constructed;
Fig. 4 is a partly enlarged cross-sectional view (for easy understanding, large gaps are provided among the parts; however, there are actually hardly any gaps among them) showing the state in which the protective panel with a touch input function for an electronic apparatus display window in accordance with the embodiment of the present invention is fitted into a panel fitting section of a casing together with a display to be held therein so that an electronic apparatus is constructed;
Fig. 5 is an explanatory view showing a structure in which a mat portion is formed on the entire input screen area of a touch panel on the surface of a hard coat layer of the protective panel with a touch input function for an electronic apparatus display window in accordance with the embodiment of the present invention and a state in which input is being carried out on the mat portion with a pen (stylus);
Fig. 6 is a plan view showing a structure in which a concave portion or a convex portion, which is another example of a fine concave/convex portion, is provided on the surface of a hard coat layer corresponding to a home position of the input screen area of a touch panel in the protective panel with a touch input function for an electronic apparatus display window in accordance with the embodiment of the present invention;
Fig. 7 is a plan view showing a structure in which a concave portion or a convex portion, which is still another example of a fine concave/convex portion, is provided on the surface of a hard coat layer corresponding to a home position of the input screen area of a touch panel in the protective panel with a touch input function for an electronic apparatus display window in accordance with the embodiment of the present invention;
Fig. 8 is a plan view showing a structure in which a concave portion or a convex portion is provided on the surface of a hard coat layer corresponding to a determination key of the input screen area of a touch panel in the protective panel with a touch input function for an electronic apparatus display window in accordance with the embodiment of the present invention;
Fig. 9 is a perspective view showing a structure in which a concave portion is provided on the surface of a hard coat layer corresponding to a determination key of the input screen area of a touch panel in the protective panel with a touch input function for an electronic apparatus display window in accordance with the embodiment of the present invention;
Fig. 10 is a perspective view showing a structure in which a concave portion is provided on the surface of a hard coat layer corresponding to a mechanical switch provided on a concealed portion other than the input screen area of a touch panel in the protective panel with a touch input function for an electronic apparatus display window in accordance with the embodiment of the present invention;
Fig. 11A is an explanatory view showing a state in which, in the protective panel of Fig. 9 or Fig. 10, when a finger is allowed to simply slide on the surface of the hard coat layer, the finger does not reach the bottom of the concave portion or the pressure of the finger is not exerted thereon;
Fig. 11B is an explanatory view showing a state in which, in the protective panel of Fig. 9 or Fig. 10, when a finger is pressed on the concave portion on the surface of the hard coat layer inward, the finger is allowed reach the bottom of the concave portion so that the determination key or the mechanical switch located on the bottom of the concave portion is pushed down with the pressure of the finger;
Fig. 12 is a perspective view showing a concave portion for erroneous input prevention for a power supply key in the protective panel with a touch input function for an electronic apparatus display window in accordance with the embodiment of the present invention;
Fig. 13 is a perspective view showing a concave portion for erroneous input prevention for a camera shutter key in the protective panel with a touch input function for an electronic apparatus display window in accordance with the embodiment of the present invention;
Fig. 14 is a perspective view showing a scroll bar portion formed by arranging an arbitrary pattern of concave portions or convex portions (bumps) on the surface of a hard coat layer in the protective panel with a touch input function for an electronic apparatus display window in accordance with the embodiment of the present invention;
Fig. 15A is an enlarged plan view showing a structure in which concave portions or convex portions, each having a round dot shape, are arranged at predetermined intervals in a dispersed manner as a first example of a fine concave/convex portion forming a scroll bar portion of the input screen area of a touch panel in the protective panel of Fig. 14;
Fig. 15B is an enlarged plan view showing a structure in which concave portions or convex portions 22Gb, each having a thin laterally elongated shape, are arranged at predetermined intervals in a lateral stripe pattern as a second example of a fine concave/convex portion forming the scroll bar portion of the input screen area of the touch panel in the protective panel of Fig. 14;
Fig. 15C is an enlarged plan view showing a structure in which concave portions or convex portions 22Gc, each having a thin longitudinally elongated shape, are arranged at predetermined intervals in a longitudinal stripe pattern as a third example of a fine concave/convex portion forming the scroll bar portion of the input screen area of the touch panel in the protective panel of Fig. 14;
Fig. 16A is a perspective view showing a state in which a concave portion or a convex portion for a slide-stopping portion is provided as a fine concave/convex portion on a movable portion, in a closed state of a portable apparatus of the protective panel with a touch input function for an electronic apparatus display window in accordance with the embodiment of the present invention;
Fig. 16B is a perspective view showing a state in which a finger is engaged with the concave portion or convex portion for the slide-stopping portion, in the middle of a slide opening process or upon completion of the opening process of the portable apparatus of the protective panel of Fig. 16A;
Fig. 16C is an enlarged plan view showing a case in which concave portions or convex portions 22Ha, each having a thin lateral rectangular shape, are arranged at predetermined intervals in a lateral stripe pattern as an example of a convex portion for the slide-stopping portion, in the protective panel of Fig. 16A;
Fig. 16D is an enlarged plan view showing a case in which concave portions or convex portions 22Hb, each having a round dot shape, are arranged at predetermined intervals in a scattered manner as an example of a convex portion for the slide-stopping portion, in the protective panel of Fig. 16A;
Fig. 17A is a side view illustrating an aspect ratio of a fine concave/convex portion of the protective panel with a touch input function for an electronic apparatus display window in accordance with the embodiment of the present invention;
Fig. 17B is a plan view illustrating the aspect ratio of the fine concave/convex portion of the protective panel of Fig. 17A;
Fig. 17C is a plan view illustrating the aspect ratio of the fine concave/convex portion of the protective panel of Fig. 17A;
Fig. 18 is a cross-sectional view showing a case in which the fine concave portion of the protective panel with a touch input function for an electronic apparatus display window in accordance with the embodiment of the present invention is used as a speaker hole;
Fig. 19A is a perspective view showing a case in which a fine convex portion of the protective panel with a touch input function for an electronic apparatus display window in accordance with the embodiment of the present invention is used as a camera lens;
Fig. 19B is a side view showing the case in which the fine convex portion of the protective panel of Fig. 19A is used as a camera lens;
Fig. 20A is a perspective view showing a case in which the fine concave portion of the protective panel with a touch input function for an electronic apparatus display window in accordance with the embodiment of the present invention is used for preventing scratches on the camera lens;
Fig. 20B is a side view showing a case in which the fine concave portion of the protective panel of Fig. 20A is used for preventing scratches on the camera lens;
Fig. 21 is a perspective view showing an application example of a protective panel of a conventional electronic apparatus display window;
Fig. 22 is a view illustrating a relationship between a conventional protective panel with a touch input function for a electronic apparatus display window and a product; and
Fig. 23 is an exploded perspective view showing a structure of the conventional protective panel with a touch input function for the electronic apparatus display window.

### Best Mode for Carrying Out the Invention

Before the description of the present invention proceeds, it is to be noted that like parts are designated by like reference numerals throughout the accompanying drawings.

The present invention will be described in detail based on embodiments shown in the figures.

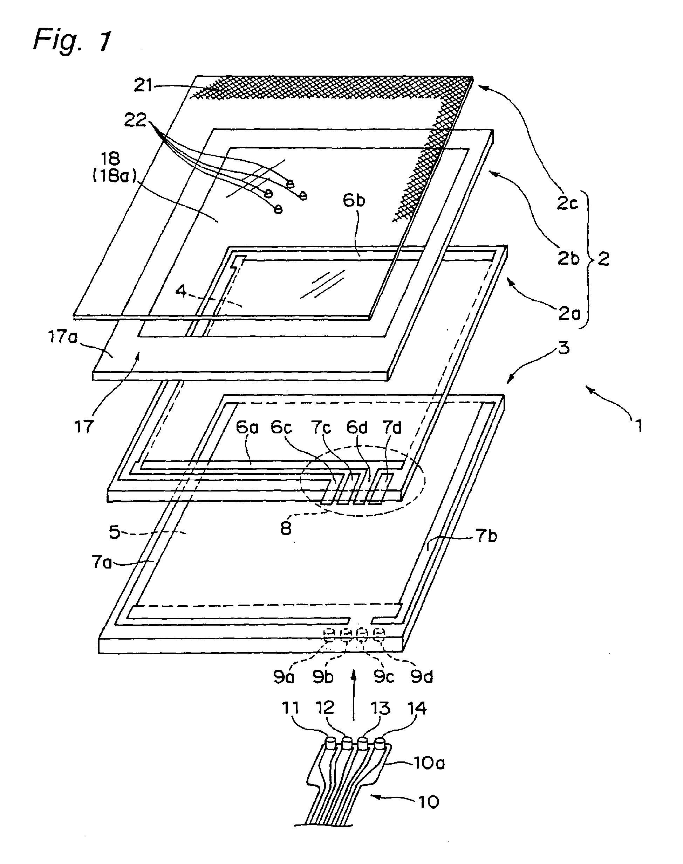

Fig. 1 is an exploded perspective view showing a structure of a protective panel 1 with a touch input function for an electronic apparatus display window in accordance with an embodiment of the present invention.

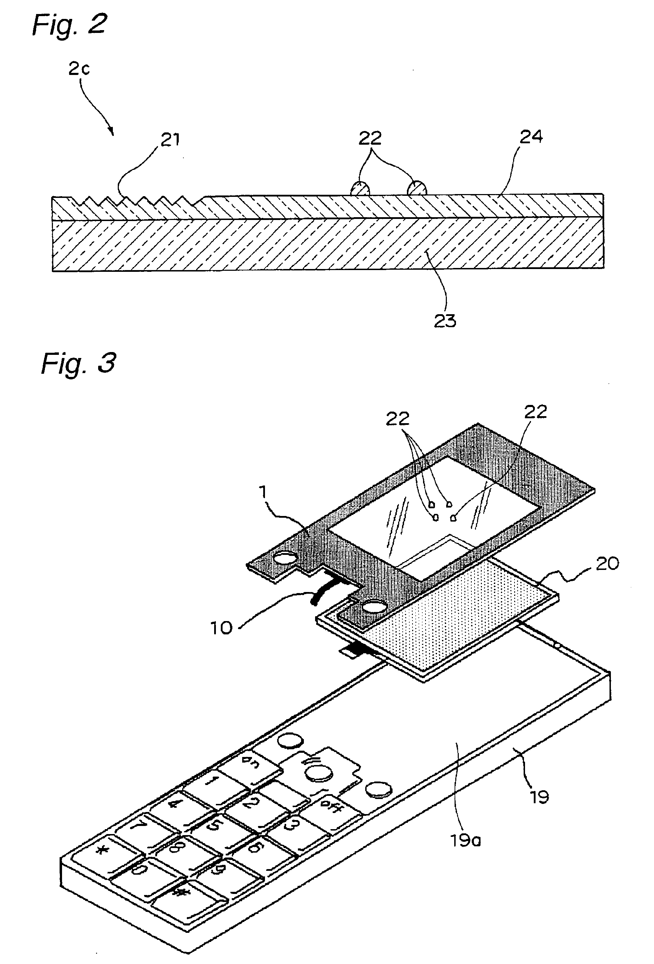

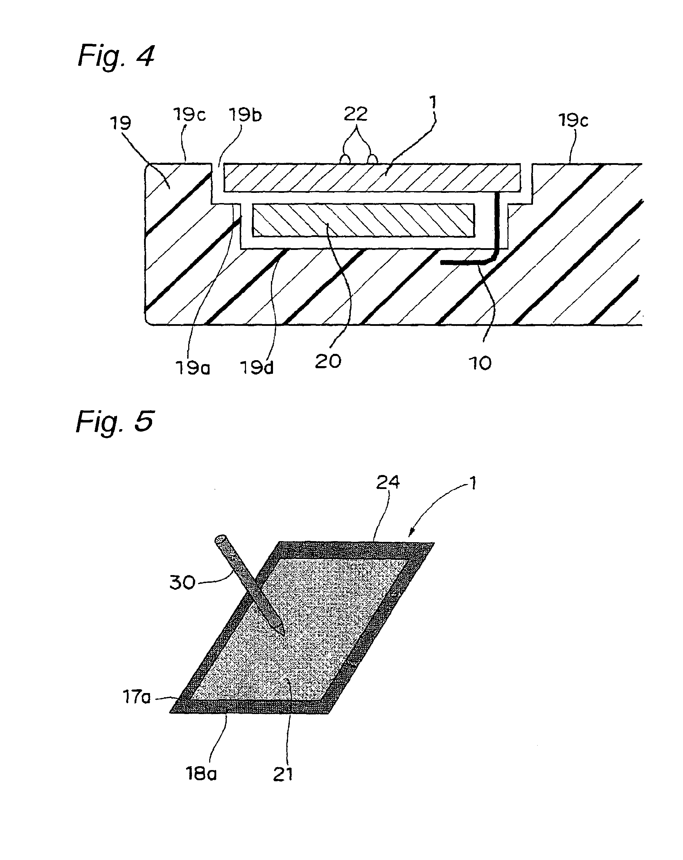

In Fig. 1, the protective panel 1 with a touch input function for an electronic apparatus display window includes a lower electrode panel 3, an upper electrode sheet 2a, and a decorative sheet 2b. For example, the protective panel 1 having a rectangular shape is shown in the figure; however, the panel may have a square shape or the like. As shown in Figs. 3 and 4, the protective panel 1 is designed so that a touch input face (outside surface) (a hard coat layer 24, which will be described later) of the protective panel 1 can be fitted into a panel fitting section 19a of a casing 19 having an opening 19b to be held therein with no gap wherever possible, in such a manner as to form the same plane as the surface 19c of the casing 19.

A display 20 of a liquid crystal panel, an organic EL panel, or the like is fitted into a display fitting section 19d located inner from the panel fitting section 19a. Therefore, the protective panel 1 and the display 20 are respectively fitted into the panel fitting section 19a and the display fitting section 19d of the casing 19 to be held therein, so that an electronic apparatus is constructed with the protective panel 1 protecting the surface side of the display 20.

The lower electrode panel 3 is constructed so as to have a lower transparent electrode 5 on the upper face of a protective panel main body that is non-flexible and also to have lower circuits 7a and 7b formed on the periphery (for example, opposing paired side portions extending in a longitudinal direction) of the lower transparent electrode 5.

The upper electrode sheet 2a includes an upper transparent electrode 4 provided on a lower face of a flexible transparent insulating film at a position opposing the lower transparent electrode 5 and is designed so as to have upper circuits 6a to 6d, 7c, and 7d formed on the periphery of the upper transparent electrode 4. The upper circuits 6a and 6b are provided on opposing paired side portions extending in the width direction. The connecting upper circuit (electrode end) 6d is connected to the upper circuit 6a and the connecting upper circuit (electrode end) 6c is connected to the upper circuit 6b, so that the connecting upper circuit (electrode end) 6d and the connecting upper circuit (electrode end) 6c as well as the upper circuits 7c and 7d are formed so as to extend round to the lower face of the upper electrode sheet 2a. Thus, the connecting upper circuit (electrode end) 7c is connected to the lower circuit 7a, and the connecting upper circuit (electrode end) 7d is connected to the lower circuit 7b.

The decorative sheet 2b is designed so as to provide a decorative layer 17 that forms a transparent window section (window through which touch input can be executed) by concealing the lower circuits 7a and 7b and the upper circuits 6a to 6d as well as 7c and 7d with a pattern portion 17a, on a flexible transparent insulating film. The pattern portion 17a functions as one example of a concealing portion.

The lower electrode panel 3 and the upper electrode sheet 2a are bonded to each other with a double-sided adhesive tape (not shown) on the peripheral edge portions, with an air layer being interposed between the electrodes, and the decorative sheet 2b is bonded onto the upper face of the upper electrode sheet 2a by using a transparent adhesive.

The lower electrode panel 3 and the upper electrode sheet 2a are provided with circuits having predetermined patterns, such as bus bars and routing lines, that is, the lower circuits 7a and 7b as well as the upper circuits 6a to 6d, 7c, and 7d, that are formed on the same face as that bearing the lower transparent electrode 5 and the upper transparent electrode 4, to perform external output through an FPC (flexible printed circuit board) 10. A large number of spacers (not shown) are provided on the lower electrode panel 3 or the upper electrode sheet 2a so as to be disposed between the lower electrode panel 3 and the upper electrode sheet 2a so that the two electrodes 4 and 5 provided on the respective opposing faces do not erroneously contact each other.

A transparent photocurable resin may be formed into fine dots through a photo-process as the spacers. Moreover, a large number of fine dots may be formed by a printing method as the spacers.

As a material for the non-flexible protective panel main body of the lower electrode panel 3, a material that is superior in transparency and can protect the display 20, such as a liquid crystal panel or an organic EL panel, from damages is used. For example, a plastic plate made of methacrylic resin (PMMA), acrylonitrile-styrene copolymer resin (AS), acrylonitrile-butadiene-styrene copolymer resin (ABS), cellulose propionate resin, polycarbonate resin (PC), polystyrene resin (PS), polyester resin, polyethylene resin, or the like may be used. In particular, methacrylate (PMMA), which is superior in transparency, may be preferably used as the material for the protective panel main body. Moreover, a glass plate may be used as the material for the protective panel main body.

Moreover, a film of an engineering plastic of a polycarbonate type, a polyamide type, or a polyether ketone type; or an acrylic type; or a polyethylene terephthalate type; or a polybutylene terephthalate type, may be bonded to a face of this plate on which the lower transparent electrode 5 is formed so as to allow the lower transparent electrode 5 to serve as the lower electrode panel 3 with the film being interposed therebetween.

Moreover, as a material for the flexible transparent insulating film of the upper electrode sheet 2a, for example, a film of an engineering plastic of a polycarbonate type, a polyamide type, or a polyether ketone type; or an acrylic type; or a polyethylene terephthalate type; or a polybutylene terephthalate type may be used.

The upper electrode sheet 2a and the lower electrode panel 3 are disposed face to face with each other between the transparent electrodes 4 and 5 with a gap being formed therebetween, and the peripheral edge portions are bonded to each other. As the transparent electrodes 4 and 5, a metal oxide film made of a material such as tin oxide, indium oxide, antimony oxide, zinc oxide, cadmium oxide, or indium tin oxide (ITO); or a composite film mainly made of these metal oxides; or a metal film made of gold, silver, copper, tin, nickel, aluminum, or palladium, may be formed into a transparent conductive film by using vacuum deposition, sputtering, ion plating, or CVD, and unnecessary portions thereof are then etched and removed therefrom to be formed into a rectangular shape.

On the upper electrode sheet 2a, belt-shaped bus bars 6a and 6b, which are connected to the upper transparent electrode 4 as the upper circuit and made of a metal such as gold, silver, copper, or nickel, or a conductive paste of carbon or the like, are formed in parallel with each other. Moreover, on the lower electrode panel 3, belt-shaped bus bars 7a and 7b, which are connected to the lower transparent electrode 5 as the lower circuit and disposed orthogonal to the bus bars 6a and 6b, are formed. Like the belt-shaped bus bars 6a and 6b, the belt-shaped bus bars 7a and 7b are made of a metal such as gold, silver, copper, or nickel, or a conductive paste of carbon or the like. The belt-shaped bus bars 6a, 6b, 7a, and 7b may be formed by using a printing method such as screen printing, offset printing, gravure printing, or flexographic printing; a photoresist method; or a brush painting method. In general, the formation positions of the bus bars 7a, 7b, 6a, and 6b are located as close to the end portion as possible with an area having none of the bus bars 7a, 7b, 6a, and 6b being prepared in a central portion as wide as possible.

Circuits of the bus bars 6a, 6b, 7a, and 7b are extended to a connecting portion 8 arranged on an edge portion of the upper electrode sheet 2a so as to be gathered into one portion. In Fig. 1, the bus bars 6a and 6b of the upper electrode sheet 2a are extended to the electrode ends 6d and 6c of the connecting portion 8 respectively, and the lower circuits extended from the bus bars 7a and 7b of the lower electrode panel 3 are connected to electrode ends 7c and 7d formed on the connecting portion 8 of the upper electrode sheet 2a in parallel with the electrode ends 6d and 6c, by using conductive adhesives (not shown) inside through holes that penetrate the lower electrode panel 3.

In association with the electrode ends 6c, 7c, 6d, and 7d of the connecting portion 8, through holes 9a, 9b, 9c, and 9d are formed on the lower electrode panel 3 by using a drill or a pressing machine, with a conductive adhesive (not shown) being filled therein.

Moreover, in association with these through holes 9a to 9d, metal pins 11, 12, 13, and 14 are provided so as to stand on a connecting-side end portion of the FPC (flexible printed circuit board) 10 so that the metal pins 11 to 14 are made conductive to the electrode ends 6c, 7c, 6d, and 7d through the conductive adhesives (not shown in Fig. 1).

Moreover, a decorative sheet 2b having a transparent window 18 is bonded to the surface of the upper electrode sheet 2a. On the decorative sheet 2b, the decorative layer 17 is formed that allows a pattern portion 17a to conceal the periphery of the transparent window 18, that is, areas opposing the upper circuits and the lower circuits, on one of the surfaces of a flexible transparent insulating film made of, for example, a film of an engineering plastic of a polycarbonate type, a polyamide type, or a polyether ketone type; or an acrylic type; or a polyethylene terephthalate type; or a polybutylene terephthalate type. That is, the formation portion of the decorative layer 17 forms the pattern portion 17a, and the non-formation portion thereof forms the transparent window 18.

To form the decorative layer 17, a colored ink containing a resin such as a polyvinyl-based resin, a polyamide-based resin, a polyester-based resin, a polyacrylic resin, a polyurethane-based resin, a polyvinylacetal-based resin, a polyester-urethane-based resin, or an alkyd resin as a binder, as well as a pigment or a dye having an appropriate color as a colorant, is preferably used. The formation method for the decorative layer 17 includes a normal printing method such as screen printing, offset printing, gravure printing, or flexographic printing. In particular, to carry out multi-color printing or gradation expression, the offset printing method or the gravure printing method are suitable.

Moreover, the decorative layer 17 may be made of a metal thin film, or may be prepared as a combination of a picture pattern printed layer with a metal thin film layer. The metal thin film layer provides metallic gloss as the decorative layer 17 and is formed by using a vacuum deposition method, a sputtering method, an ion plating method, or a plating method. In this case, in accordance with a metallic gloss color to be represented, a metal such as aluminum, nickel, gold, platinum, chromite, copper, tin, indium, silver, titanium, lead, or zinc, or an alloy or a compound of these may be used. The film thickness of the metal thin film layer is generally set to about 0.05 µm. Moreover, in forming the metal thin film, a pre-anchor layer or a post-anchor layer may be formed so as to improve adhesion to another layer.

Furthermore, a hard coat layer 2c (see Fig. 2) is bonded to the surface of the decorative sheet 2b. The hard coat film 2c is formed by using as a main body a flexible transparent insulating film 23 made of, e.g., a film 23 of an engineering plastic of a polycarbonate type, a polyamide type, or a polyether ketone type; or an acrylic type; or a polyethylene terephthalate type; or a polybutylene terephthalate type, with the hard coat layer 24 being formed on the flexible transparent insulating film 23 at its face (upper face) opposite the bonded face (lower face) to the decorative sheet 2b.

A photocurable resin such as an acrylacrylate - based, a polyester acrylate-based, a urethane acrylate-based, or an epoxy acrylate-based resin may be used as the hard coat layer 24. A normal coating method such as a roll coater is used to form a hard coat film, and then, the film is cured by UV irradiation so as to form the hard coat layer 24. In carrying out the UV irradiation curing process, in accordance with the amount of shrinkage of the hard coat film, a back layer is preferably formed on the bonding face to the decorative sheet 2b so as to prevent the hard coat film from curling.

The feature of the embodiment of the present invention is, as shown in Figs. 1 and 2, to provide fine concave/convex portions 21 and 22 such as a fine concave portion or a fine convex portions on a portion of the surface of the hard coat layer 24 serving as the outermost surface, and consequently to obtain an outside surface having a high additional value that has not been achieved by a conventional protective panel with a touch input function.

In the following, various examples of the fine concave/convex portions 21 and 22 such as the fine concave portion or the fine convex portions will be described.

For example, in order to provide high-quality feeling/touch from a design point of view, as shown in Figs. 1 and 2, a mat portion 21 is formed on the entire surface of the hard coat layer 24 or on one area of the surface (for example, on the entire surface of the transparent window (window that allows touch input) 18 or, in contrast, on the peripheral concealed portion) as one example of the fine concave/convex portion, by carrying out a partial matting process thereon. The processing method is carried out as follows: a hard coat film applied to the surface of a flexible transparent insulating film 23 is dried by applying hot wind or UV irradiation thereto to be formed into a semi-cured state, and this hard coat film in the semi-cured state is subjected to UV irradiation while being partly pressed with a mold having the fine concave/convex portions formed thereon, so that the hard coat film is completely cured. In Figs. 1 and 2, both of the fine concave/convex portions 22 for use as home positions and the mat portion 21 are shown so as to save the number of drawings; however, both of these are not necessarily required, and either one of them may be disposed.

For easy understanding, the entire face of the transparent window portion (window that allows touch input) 18 is hereinafter referred to as an "input screen area 18a of the touch panel."

Fig. 5 is a view showing a state in which the mat portion 21 is formed on the entire input screen area 18a of the touch panel on the surface of the hard coat layer 24 and input is carried out on the mat portion 21 with a pen (stylus) 30. Since the mat portion 21 with fine concave/convex portions is formed on the input screen area 18a of the touch panel corresponding to the screen portion of the display 20, it is possible to provide an input touch as if writing on a piece of paper with a pen.

The size of the fine concave/convex portions of the mat portion 21 that allows this input touch as if writing on a piece of paper with a pen is preferably set in the range of the greatest height R_{z} (JIS B0601: 2001) of 1 to 100 µm as well as in the range of the average length R_{Sm} (JIS B0601: 2001) of 10 to 500 µm. In the case where R_{z} is smaller than 1 µm, proper input touch is not obtained, while, in the case where R_{z} is greater than 100 µm, the visibility of the screen is impaired. In the case where R_{Sm} is smaller than 10 µm, proper input touch is not obtained, and in the case where R_{Sm} is greater than 500 µm as well, proper input touch is not obtained.

Moreover, another example of the structure in which partial fine concave/convex portions 22 are formed on the surface of the hard coat layer 24 serving as the outermost face is proposed in which concave portions or convex portions (bumps) 22A for blind touch may be formed. In other words, by using the concave portions or convex portions (bumps) 22A, input positions can be confirmed depending only on the touch on the surface of the protective panel 1 with a touch input function. In the case where blind touch for performing input on the input screen area 18a of the touch panel without the necessity of viewing the keys one by one is carried out, the positions of the fingers on the key area referred to as home position are important, and since the concave portions or convex portions 22A make it possible to easily determine the positions of the fingers accurately, the finger(s) can be positioned on the home position quickly.

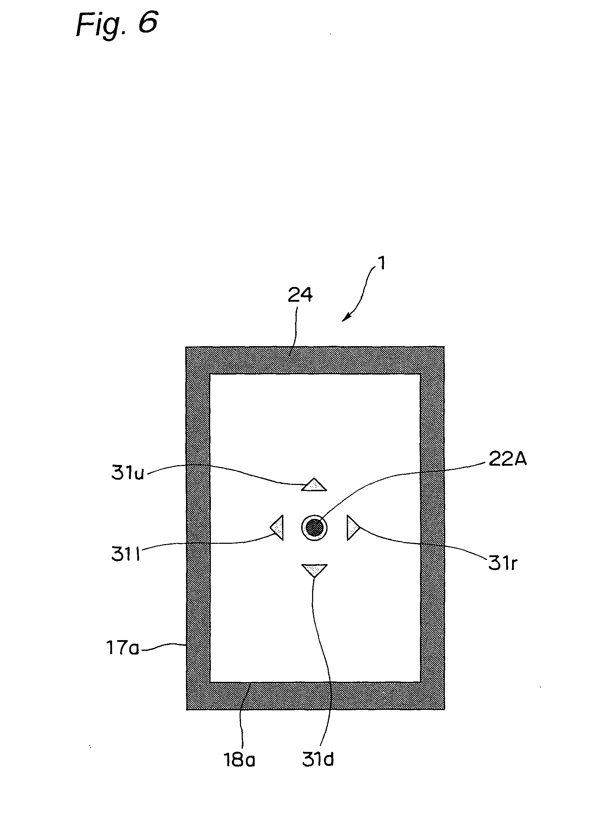

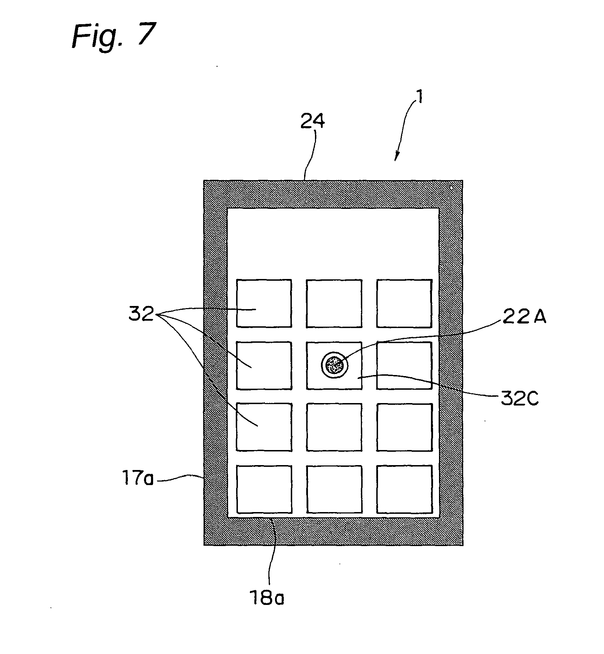

More specifically, as shown in Figs. 6 and 7, concave portions or convex portions 22 serving as another example of the fine concave/convex portions 22 are formed on the surface of the hard coat layer 24 corresponding to the home positions of the input screen area 18a of the touch panel so that blind touch and reliable input can be carried out. Fig. 6 exemplified a case in which the concave and convex portion 22A is disposed in the center of an upward key (up key) 31u, a downward key (down key) 31d, a leftward key (left key) 311, and a rightward key (right key) 31r as home position. Moreover, Fig. 7 exemplifies a case in which the concave or convex portion 22A is disposed at a position corresponding to a center key 32c of numeric figure and alphabetical keys 32 arrayed in a large number.

The concave or convex portion 22A for use as the home position is formed into a round shape or the like, and the diameter thereof is preferably set in a range of from 0.1 to 10 mm. In the case where the diameter is smaller than 0.1 mm, proper input touch is not obtained, while, in the case where the diameter is greater than 10 mm, the visibility of the screen is impaired.

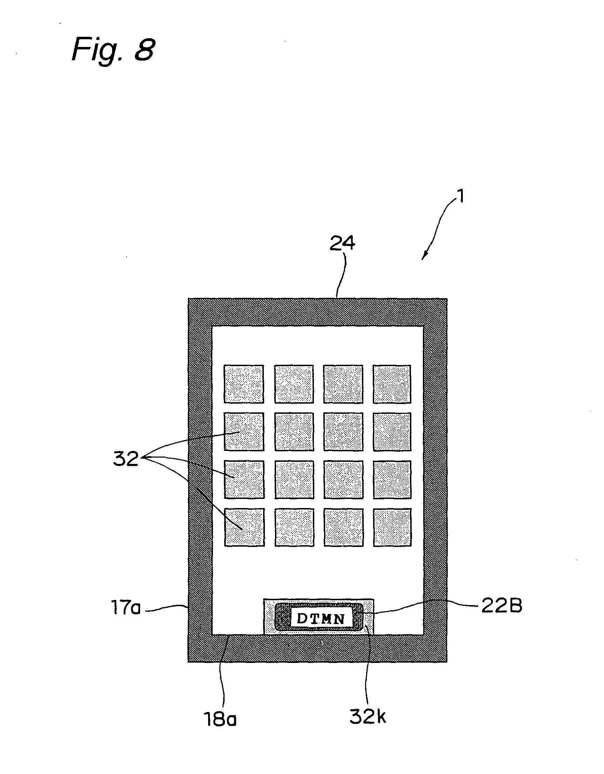

As shown in Fig. 8, by disposing a concave portion or a convex portion 22B that has, for example, a rectangular shape, a square shape, or a round shape, and that also has approximately the same size as that of a determination key 32k, on the surface of the hard coat layer 24 corresponding to the portion above the determination key 32k of the input screen area 18a of the touch panel, blind touch input to the determination key 32k and reliable input to the determination key 32k become possible.

The concave portion or convex portion 22B for the determination key may be formed into a round shape or the like, and the diameter thereof is preferably set in a range of from 0.1 to 10 mm. In the case where the diameter is smaller than 0.1 mm, proper input touch is not obtained, while, in the case where the diameter is greater than 10 mm, the visibility of the screen is impaired.

Concave portions 22C and 22D serving as an example of the fine concave/convex portion 22 will be described below in detail.

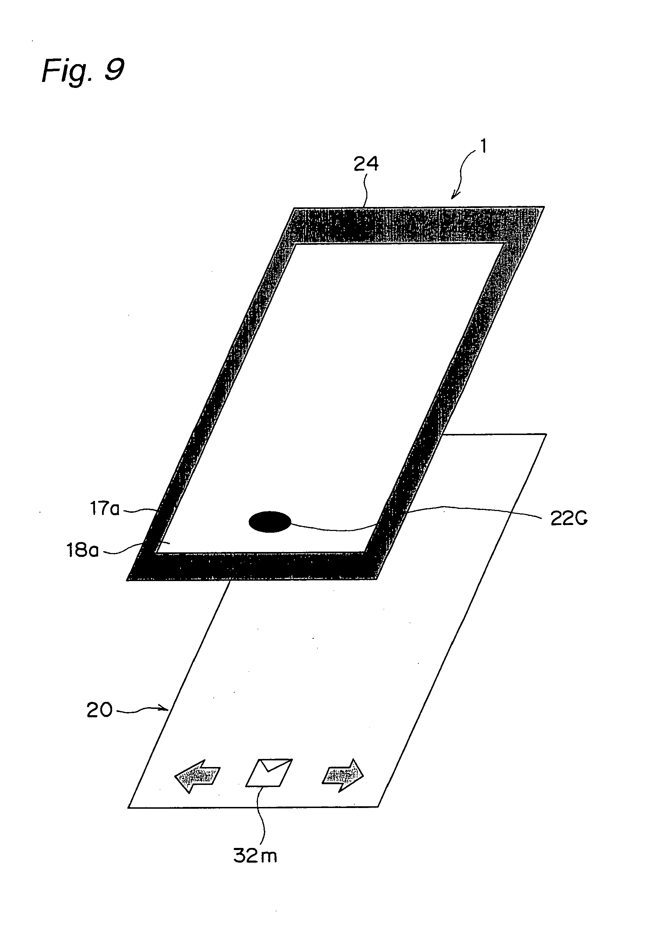

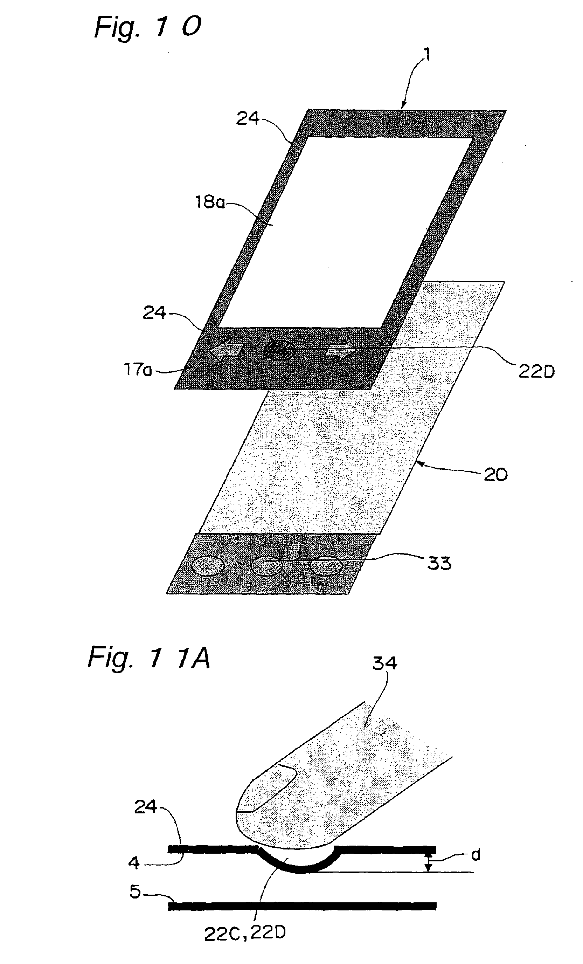

As shown in Fig. 9, a concave portion 22C having approximately the same size as, or a size smaller than a determination key 32m (for example, in a rectangular shape, a square shape, or a round shape) of the input screen area 18a of the touch panel is arranged on the surface of the hard coat layer 24 corresponding to the determination key 32m (for example, the key that is not frequently used normally and is used for determining an operation with a mail transmission key or the like) so that erroneous input to the determination key 32m is prevented and consequently, reliable input is available. Moreover, as shown in Fig. 10, in addition to the determination key of the input screen area 18a of the touch panel, a concave portion 22D having approximately the same size as a mechanical switch 33, or a size smaller than that of the mechanical switch 33 (for example, in a rectangular shape, a square shape, or a round shape) may be arranged on the surface of the hard coat layer 24 corresponding to the mechanical switch 33 disposed on a concealed portion (pattern portion) 17a other than the input screen area 18a of the touch panel; thus, erroneous input to the mechanical switch 33 is prevented and consequently, reliable input is available.

That is, as shown in Fig. 11A, in the case where a finger 34 is allowed to simply slide on the surface of the hard coat layer 24, the finger 34 does not reach the bottom of the concave portion 22C or 22D or the pressure of the finger 34 is not exerted thereon, with the result that no operation for pressing the determination key 32m or the mechanical switch 33 that is located on the bottom of the concave portion 22C or 22D is generated.

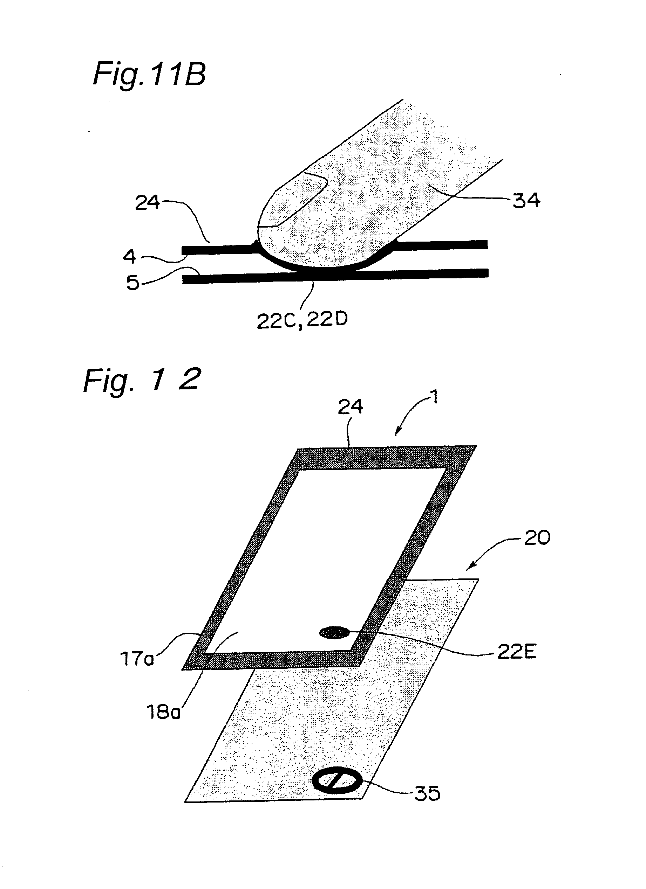

In contrast, as shown in Fig. 11B, upon pressing inward the concave section 22C or 22D on the surface of the hard coat layer 24 by the finger, the finger 34 is allowed to reach down to the bottom of the concave portion 22C or 22D so that by the pressure of the finger 34, an operation for pushing the determination key 32m or the mechanical switch 33 located on the bottom of the concave portion 22C or 22D takes place. For example, in the case of the determination key 32m, the upper electrode 4 and the lower electrode 5 are made in contact with each other. In the case of the mechanical switch 33, the switch is turned on. Thus, only upon pushing with clear intention on the determination key 32m or the mechanical switch 33 on the bottom of the concave portion 22C or 22D with the finger 34, it is possible to turn the determination key 32m or the mechanical switch 33 on so that erroneous input to the determination key 32m or the mechanical switch 33 is prevented and consequently, reliable input is available.

The depth d of the concave portion 22C or 22D is preferably set to, for example, about 0.01 to 2 mm. In the case where the depth is smaller than 0.01 mm, proper input touch is not obtained, while, in the case where the depth d is greater than 2 mm, the preventive function against erroneous input is lowered in level.

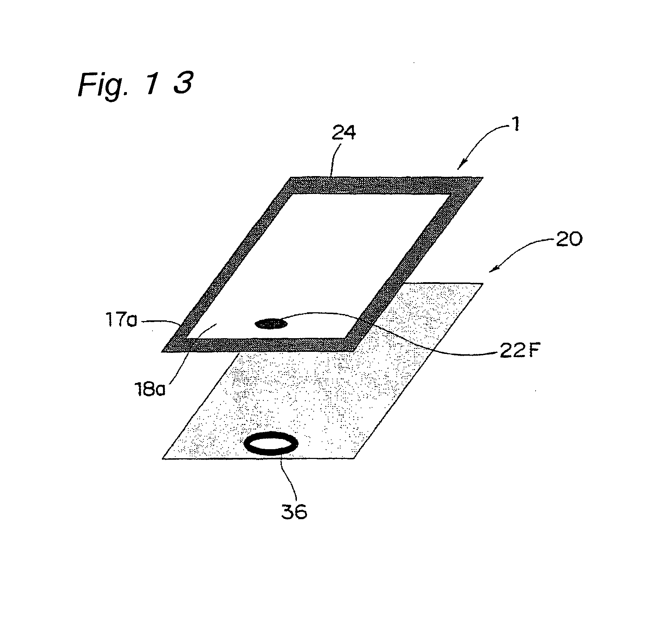

As another application of the concave portion for preventing erroneous input, Fig. 12 shows a concave portion 22E for preventing erroneous input to a power supply key 35, and Fig. 13 shows a concave portion 22F for preventing erroneous input to a camera shutter key 36. In this manner, by forming the concave portion 22E or 22F on the surface of the hard coat layer 24 corresponding to the key 35 or 36 to which erroneous input is to be prevented, it is possible to prevent erroneous input to the key 35 or 36, and consequently to carry out reliable input to the key 35 or 36.

The concave portion 22C, 22D, 22E, or 22F for preventing erroneous input may be formed into a round shape or the like, and the diameter thereof is preferably set in a range of from 0.1 to 10 mm. In the case where the diameter is smaller than 0.1 mm, a finger is not allowed to reach the bottom of the concave portion or the pressure is not exerted thereon even when the finger is pressed on, while, in the case where the diameter is greater than 10 mm, since the finger is always allowed to reach the bottom of the concave portion, the erroneous input preventive property is lowered.

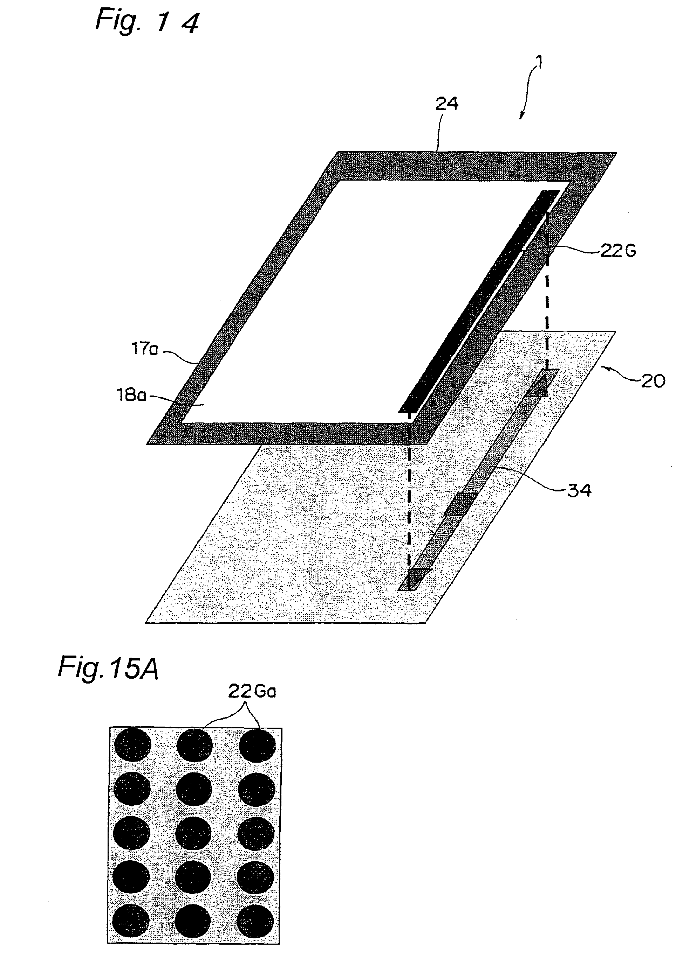

Moreover, as shown in Fig. 14, concave portions or convex portions (bumps) 22G may be provided on the surface of the hard coat layer 24 in a desired pattern, so that when the finger 34 is allowed to slide on the input screen area 18a of the touch panel, the slid position of the finger 34 can be recognized only with the touch of the finer 34. The formation method of the concave portion or convex portion (bump) 22G is carried out as follows: a hard coat film applied to form the hard coat layer 24 is dried by applying hot wind and UV irradiation thereto to be formed into a semi-cured state, this hard coat film in the semi-cured state is subjected to UV irradiation, a UV ink made of a material that can be used for forming the hard coat layer 24 is applied onto the hard coat film in the semi-cured state by using a dispenser, and the film is subjected to UV irradiation so that the hard coat film and the concave portion or the convex portion (bump) 22G are completely cured. Since the concave portion or the convex portion (bump) 22G is cured together with the hard coat film, the concave portion or convex portion (bump) 22G and the hard coat film are superior in adhesion with each other, and even after repetitive input with a pen or a nail, the concave portion or the convex portion (bump) 22G is not separated from the hard coat film.

Fig. 14 shows a specific example of the concave portion or the convex portion (bump) 22G in which by arranging a plurality of fine concave/convex portions 22G on the surface of the hard coat layer 24 corresponding to a scroll bar portion (for example, a right end edge portion of Fig. 15A) of the input screen area 18a of the touch panel, it becomes possible to obtain a reliable input touch when the pen or the finger is slid on the plural fine concave/convex portions 22G.

Fig. 15A shows a first example of the plurality of fine concave/convex portions 22G in which, in the case where round-dot shaped concave portions or convex portions 22Ga are disposed at predetermined intervals in a dispersed manner, the diameter of the concave portions or convex portions 22Ga forming the round dots is preferably set to 0.01 to 1 mm, and the pitch between the adjacent concave portions or convex portions 22Ga is preferably set to 0.01 to 5 mm. The reason for the fact that the diameter of the concave portions or convex portions 22Ga is set to 0.01 to 1 mm is that in the case where the diameter of the concave portion or the convex portion 22Ga is smaller than 0.01 mm, proper input touch is not obtained from the concave portions or convex portions 22Ga, while, in the case where the diameter of the concave portions or convex portions 22Ga is greater than 1 mm, the pen or the finger is caught by the concave portions or convex portions 22Ga, with the result that smooth sliding is not possible on the plural concave portions or convex portions 22Ga. Moreover, the reason for the fact that the pitch between the adjacent concave portions or convex portions 22Ga is set to 0.01 to 5 mm is that in the case where the pitch between the adjacent concave portions or convex portions 22Ga is smaller than 0.01 mm, a reliable input touch is not obtained from the concave portions or convex portions 22Ga, while, in the case where the pitch between the adjacent concave portions or convex portions 22Ga is greater than 5 mm, the pen or the finger is caught by the concave portions or convex portions 22Ga, and the pen or the finger is not allowed to smoothly slide on the plural concave portions or convex portions 22Ga.

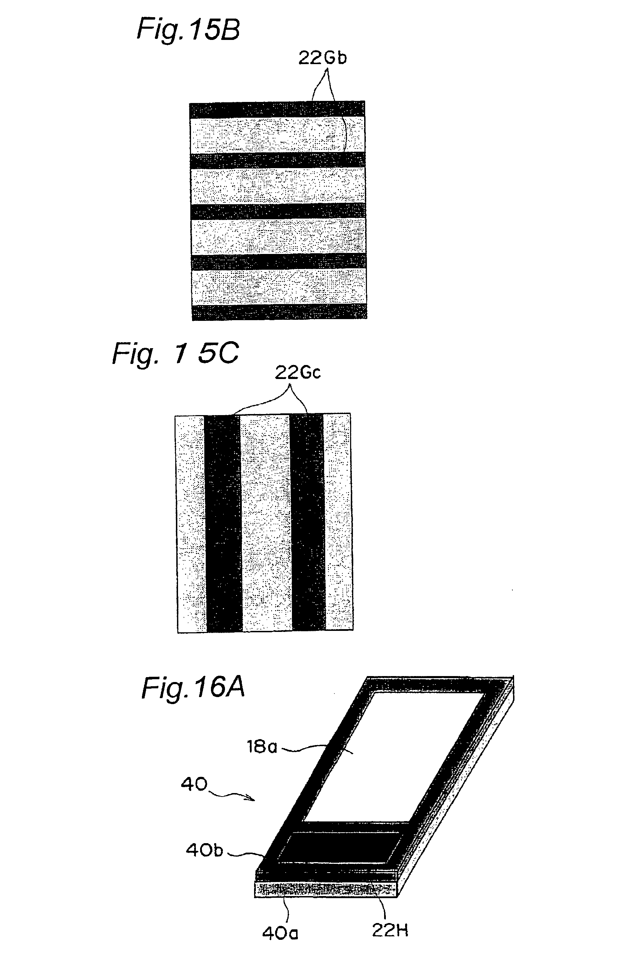

Fig. 15B shows a second example of the plurality of fine concave/convex portions 22G in which, in the case where thin, laterally elongated concave portions or convex portions 22Gb are disposed at predetermined intervals in a lateral stripe pattern, the depth of the concave portions 22Gb or the height of the convex portions 22Gb is preferably set to 0.01 to 1 mm, and the pitch between the adjacent concave portions or convex portions 22Gb is preferably set to 0.01 to 5 mm. The reason for the fact that the depth of the concave portions 22Gb is set to 0.01 to 1 mm is that in the case where the depth of the concave portions 22Gb is smaller than 0.01 mm, a reliable input touch is not obtained from the concave portions, while, in the case where the depth of the concave portions 22Gb is greater than 1 mm, the pen or the finger is caught by the concave portions 22Gb, and smooth sliding on the concave portions 22Gb is not possible. Moreover, in the case where the height of the convex portions 22Gb is smaller than 0.01 mm, a reliable input touch is not obtained from the convex portions 22Gb, while, in the case where the height of the convex portions 22Gb is greater than 1 mm, the pen or the finger is caught by the convex portions 22Gb, and smooth sliding on the convex portions 22Gb is not possible. Furthermore, the reason for the fact that the pitch of the concave portions or convex portions 22Gb is set to 0.01 to 5 mm is that in the case where the pitch of the concave portions or convex portions 22Gb is smaller than 0.01 mm, a reliable input touch is not obtained from the concave portions or convex portions 22Gb, while, in the case where the pitch thereof is greater than 5 mm, the pen or the finger is caught by the concave portions or convex portions 22Gb, and the pen or the finger is not allowed to smoothly slide on the concave portions or convex portions 22Gb.

Fig. 15C shows a third example of the plurality of fine concave/convex portions 22G in which, in the case where thin, longitudinally elongated concave portions or convex portions 22Gc are disposed at predetermined intervals in a longitudinal stripe pattern, the depth of the concave portions 22Gc or the height of the convex portions 22Gc is preferably set to 0.01 to 1 mm, and the pitch between the adjacent concave portions or convex portions 22Gc is preferably set to 0.01 to 5 mm. The reason for the fact that the depth of the concave portions 22Gc is set to 0.01 to 1 mm is that in the case where the depth of the concave portions 22Gc is smaller than 0.01 mm, a reliable input touch is not obtained from the concave portions 22Gc, while, in the case where the depth of the concave portions 22Gc is greater than 1 mm, the pen or the finger is caught by the concave portions 22Gc, and smooth sliding on the plural concave portions 22Gc is not possible. The reason for the fact that the height of the convex portions 22Gc is set to 0.01 to 1 mm is that in the case where the height of the convex portions 22Gc is smaller than 0.01 mm, a reliable input touch is not obtained from the convex portions 22Gc, while, in the case where the height of the convex portions 22Gc is greater than 1 mm, the pen or the finger is caught by the convex portions 22Gc, and smooth sliding on the plural portions 22Gc is not possible. Furthermore, the reason for the fact that the pitch of the concave portions or convex portions 22Gc is set to 0.01 to 5 mm is that in the case where the pitch of the concave portions or convex portions 22Gc is smaller than 0.01 mm, a reliable input touch is not obtained from the concave portions or convex portions 22Gc, while, in the case where the pitch of the concave portions or convex portions 22Gc is greater than 5 mm, it is not possible to obtain a guiding function, with the result that the pen or the finger tends to deviate from the scroll bar, or tends to slide too much, and besides it is not possible to obtain a proper input touch.

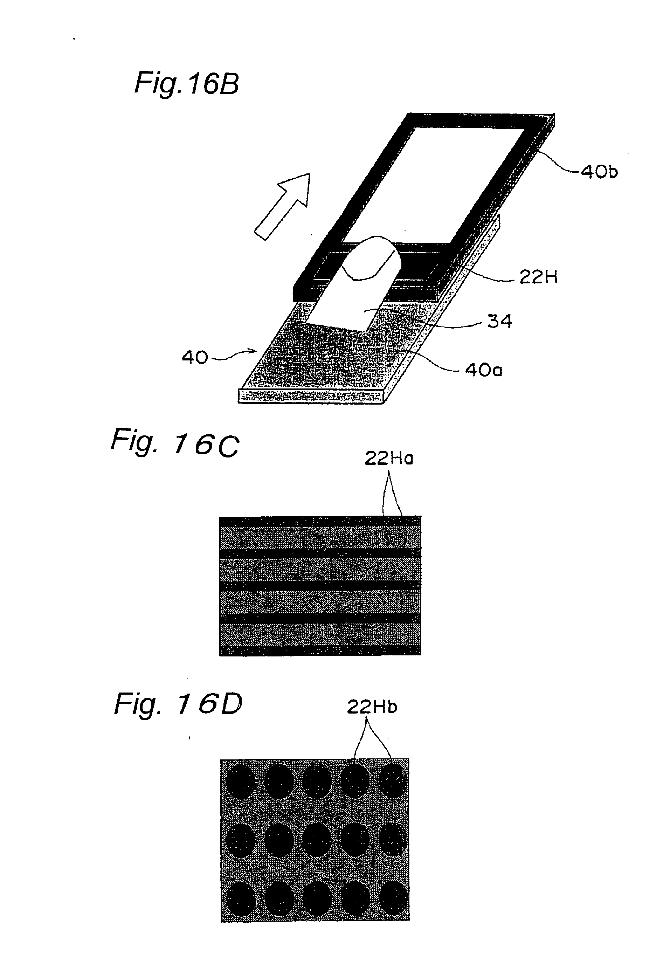

Fig. 16A is a perspective view showing a state in which a concave portion or convex portion 22H for a slide-stopping portion is provided on the lower end side of a movable portion 40b of Fig. 16A in a closed state of a portable apparatus 40, for example, a cell phone. Fig. 16B is a perspective view showing a state in which the finger 34 is stopped by the concave portion or convex portion 22H for the slide-stopping portion in the middle of a slide opening operation or upon completion of the opening operation of the cell phone 40.

The portable apparatus 40 is a slide-type portable apparatus 40 in which the movable portion 40b is slidable relative to a fixed portion 40a, and fine concave/convex portion(s) (fine concave portion(s) or fine convex portion(s)) may be provided on an end portion of the movable portion 40b as concave portion(s) or convex portion(s) 22H for the slide-stopping portion so as to function as a portion with which the finger 34 is engaged. With this arrangement, the concave portion(s) or the convex portion(s) 22H for the slide-stopping portion allow the finger 34 engaged with the end portion of the movable portion 40b to reliably carry out sliding of the movable portion 40b without slipping, relative to the fixed portion 40a.

Fig. 16C shows an example of the convex portions 22H for the slide-stopping portion in which, in the case where laterally elongated rectangular concave portions or convex portions 22Ha are disposed at predetermined intervals in a lateral stripe pattern, the width of the concave portions or convex portions 22Ha is preferably set to 0.01 to 10 mm, and the pitch between the adjacent concave portions or convex portions 22Ha is preferably set to 0.01 to 5 mm. The reason for the fact that the width of the concave portions or convex portions 22Ha is set to 0.01 to 10 mm is that in the case where the width of the concave portions or convex portions 22Ha is smaller than 0.01 mm, it is not possible to obtain an engaging/stopping touch, that is, the finger 34 is not stoppingly engaged without slipping on the concave portions or convex portions 22Ha, failing to cause the movable portion 40b of the portable apparatus 40 to slide. Meanwhile, in the case where the width of the concave portions or convex portions 22Ha is greater than 10 mm, key input tends to be obstructed. Moreover, the reason for the fact that the pitch of the concave portions or convex portions 22Ha is set to 0.01 to 5 mm is that in the case where the pitch thereof is smaller than 0.01 mm, an engaging/stopping touch is not obtained, while, in the case where the pitch is greater than 5 mm, key input tends to be obstructed.

Fig. 16D shows an another example of the convex portions 22H for the slide-stopping portion in which, in the case where round dot-shaped concave portions or convex portions 22Hb are disposed at predetermined intervals in a dispersed manner, the width of the concave portions or convex portions 22Hb is preferably set to 0.01 to 10 mm, and the pitch between the adjacent concave portions or convex portions 22Hb is preferably set to 0.01 to 5 mm. The reason for the fact that the width of the concave portions or convex portions 22Hb is set to 0.01 to 10 mm is that in the case where the width of the concave portions or convex portions 22Hb is smaller than 0.01 mm, it is not possible to obtain an engaging/stopping touch, that is, the finger 34 is unable to be stoppingly engaged without slipping on the concave portions or convex portions 22Hb, failing to cause the movable portion 40b of the portable apparatus 40 to slide. Meanwhile, in the case where the width of the concave portions or convex portions 22Hb is greater than 10 mm, key input tends to be obstructed. Moreover, the reason for the fact that the pitch of the concave portions or convex portions 22Hb is set to 0.01 to 5 mm is that in the case where the pitch thereof is smaller than 0.01 mm, an engaging/stopping touch is not obtained, while, in the case where the pitch is greater than 5 mm, key input tends to be obstructed.

Moreover, for preventing a portion of the display 20 from appearing like lenses by the convex portions (for example, 22, 22B, 22E, 22F, 22G, or 22H)(in other words, in order to improve the visibility of the convex portions, as well as improving the visibility of the screen of the display 20), fillers may be mixed with each of the convex portions 22, 22B, 22E, 22F, 22G, and 22H so as to allow them to scatter light. When a transparent concave/convex portion is present on the screen portion of the display 20, pixels tend to be enlarged by the lens effect of the concave/convex portion to cause degradation in visibility; therefore, the fillers are used to prevent the disadvantage.

The material and the amount of dispersion of the fillers are set in the following manner. For example, to provide a transparent convex portion, it is preferable not to use colored fillers. To provide a mat-state convex portion, glass beads are preferably used as the fillers, with the amount of dispersion being set in a range of from 1 to 80% by weight. By addition of the glass beads, coloring (into milky white) and lens-effect reduction can be carried out at the same time. To provide a black convex portion, carbon powders are preferably used as the fillers, with the amount of dispersion being set in a range of from 1 to 80% by weight. To provide a metallic-colored convex portion, aluminum powders or silver powders are preferably used as the fillers, with the amount of dispersion being set in a range of from 1 to 95% by weight. With respect to the dispersion amounts of the fillers, the amounts less than the lower limit values cause a difficulty in mixing the fillers, while the amounts exceeding the upper limit values cause a difficulty in producing the convex portions containing the fillers.

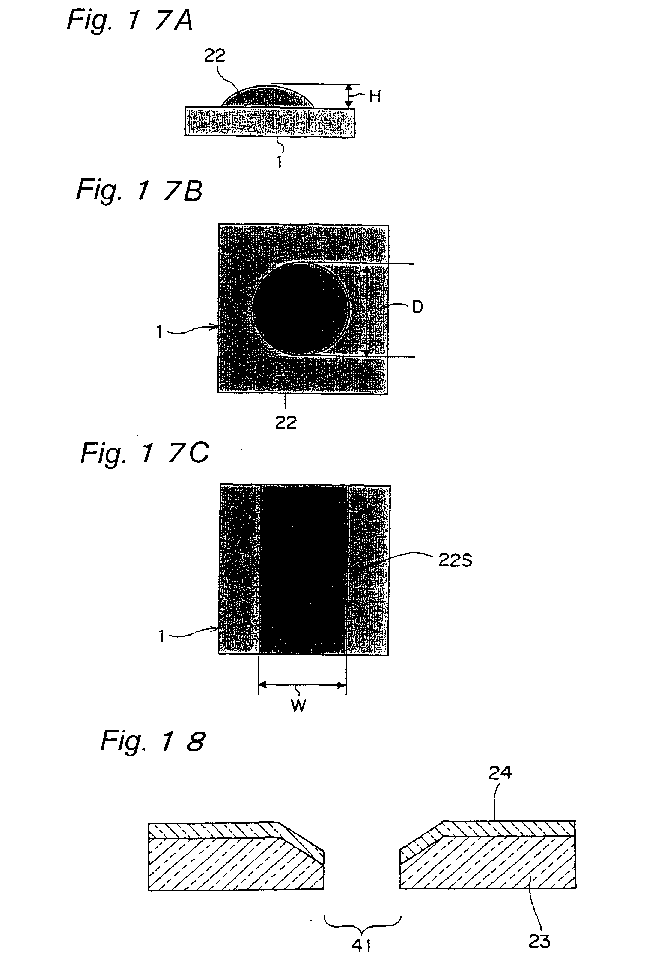

Moreover, as a condition for preventing the convex portions (for example, 22, 22B, 22E, 22F, 22G, or 22H) from coming off from the hard coat layer 24, the aspect ratio (the height H of the convex portion 22/the diameter D of the convex portion 22 or the width W of the convex portion 22S) is preferably set to 0.001 to 1, as shown in Figs. 17A to 17C. When the aspect ratio exceeds 1, it is not possible to obtain sufficient shear strength, while it is difficult to form a convex portion having an aspect ratio of less than 0.001 from the viewpoint of production.

As shown in Fig. 18, the fine concave portion may be allowed to function as a speaker hole 22L as another example of the fine concave portions. That is, in accordance with a concave shape of the speaker hole 22L, a half-cured hard coat layer in a semi-cured state may be formed on the hard coat layer 24. The speaker hole 22L may be dealt as an example of the fine concave portion without a bottom portion.

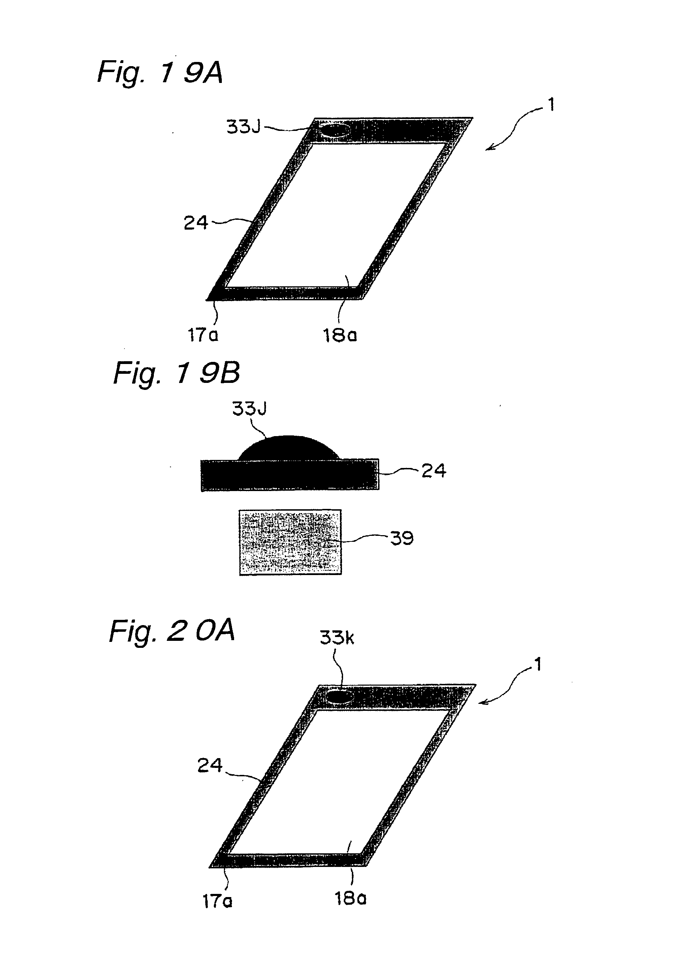

Moreover, Figs. 19A and 19B are a perspective view and a side view showing a case in which a fine convex portion 22J of the protective panel with a touch input function for an electronic apparatus display window in accordance with the embodiment of the present invention is used as a lens of a camera 39. The fine convex portion 22J is formed and disposed on the hard coat layer 24 at a position corresponding to an optical system portion of the camera 39 of the portable apparatus. By using the fine convex portion 22J as the lens of the camera 39 of the portable apparatus, cost reduction can be achieved.

In the case where the fine convex portion 22J for use as a camera lens is formed on the surface of the outside hard coat layer 24, the fine convex portion 22J for use as a camera lens is formed into a round shape or the like, and the diameter of the fine convex portion 22J for use as a camera lens is preferably set to 0.01 to 10 mm. In the case where the diameter is smaller than 0.01 mm, it is not possible to obtain a lens effect as the fine convex portion 22J, while, in the case where the diameter is larger than 10 mm, it becomes difficult to form the fine convex portion 22J.

Figs. 20A and 20B are a perspective view and a side view showing a case in which a fine concave portion 22K of the protective panel with a touch input function for an electronic apparatus display window in accordance with the embodiment of the present invention is used for preventing scratches on the lens of the camera 39. The fine concave portion 22K is formed and disposed on the hard coat layer 24 at a position corresponding to an optical system portion of the camera 39 of the portable apparatus so that it becomes possible to prevent the protective panel surface at the position corresponding to the optical system portion of the camera 39 from being scratched.

In the case where the fine concave portion 22K for preventing camera lens scratches is formed, for example, on the surface of the hard coat layer 24 outside the camera lens as an optical system portion for the camera 39 in this manner, the fine concave portion 22K is formed into a round shape or the like, and the diameter thereof is preferably set to 0.1 to 10 mm. In the case where the diameter is smaller than 0.1 mm, it is only possible to prevent scratches from occurring in a portion smaller than the camera lens, while, in the case where the diameter is larger than 10 mm, the scratch preventive property is lowered.

The thickness of the hard coat layer 24 is set to 7 to 50 µm. In the case where the thickness is smaller than 7 µm, the curing process of the hard coat film might progress immediately to a completely cured state, making it difficult to form a semi-cured state, while, in the case where the thickness is greater than 50 µm, the transparency might be lost or the layer might become too hard, making an input operation hard to carry out. From the viewpoint of practical use, the thickness of the hard coat layer 24 is more preferably set to 7 to 30 µm.

When mounting the protective panel 1 with a touch input function onto a cell phone or the like, a surface anti-scratch property of 4H or more in pencil hardness is required, and it is necessary to have such a resistance as not to be vulnerable to scratches even when rubbed with a somewhat hard material; however, as the hard coat film becomes harder, its bending property is lowered, resulting in an issue that even a slight bending stress may cause a crack. For example, in the case of a protective panel for a cell phone, a boring process is required for forming a hole for a speaker, a logo mark, or the like, and upon carrying out a boring process such as drilling, routing, or punching, a load is imposed on the hard coat on the surface, with the result that burrs or micro-cracks might occur on the hard coat layer. In the above-described examples in which the fine concave/convex portion(s) are partly formed on the surface of the hard coat layer 24, the fine concave/convex portion(s) are formed on a hard coat film in a semi-cured state, and the complete curing process can be carried out later; therefore, with respect to the issue with a load imposed upon carrying out a drilling process, a routing process, or a punching process, by completely curing the hard coat film after these processes, the hard coat layer 24 is made free from cracks and the like, and neither burrs nor micro-cracks occur on the end face. Moreover, although the thickness of the conventional hard coat layer 24 is less than 7 µm, the film thickness can be set to 7 µm or more because of the formation of the semi-cured state, so that it becomes possible to provide a hard coat layer that is superior in anti-scratching property against pen input or the like and has a hardness of 4H or more in pencil hardness.

Moreover, the upper electrode sheet 2a, the decorative sheet 2b, and the hard coat film 2c are bonded to one another into an integral unit to construct the movable sheet 2. When the surface of the hard coat film 2c is pressed with a finger, pen, or the like, the movable sheet (flexible sheet) 2 is integrally warped downward, with the result that the respective transparent electrodes 4 and 5 formed on the inner faces of the upper electrode sheet 2a and the lower electrode panel 3 are made in contact with each other so that an input position is detected. Examples of the material for the adhesive layer to be used for bonding include, e.g., a polyacrylic resin, a polystyrene-based resin, a polyamide-based resin, vinyl chloride, vinyl acetate, or an acrylic copolymer. As the forming method of the adhesive layer 5d, for example, a normal printing method such as screen printing, offset printing, a gravure printing, or flexographic printing may be used.

Specific examples will be described below.

### <Working Example 1>

An ITO film having a thickness of 20 nm was formed on the entire surface of one face of a PET film having a thickness of 0.1 mm by sputtering, and the peripheral edge portion of the ITO film was removed to form a transparent electrode having a rectangular shape with a wide width. Moreover, bus bars to be disposed on the opposing two sides of the transparent electrode laterally, and routing lines for external output from the bus bars were formed by screen-printing silver paste. Moreover, an acrylic plate having the same size as the PET film in its longitudinal and lateral lengths, with a thickness of 0.7 mm, was bonded to the surface of the PET film on the face opposing to the face on which the transparent electrode was formed, by using a baseless transparent adhesive having a thickness of 0.025 mm, and four through holes having a diameter of 1 mm to which pin shafts of an FPC with pins, which will be described later, are inserted, were formed on the edge portion by using a drilling method so that a lower electrode panel 3 was obtained.

Moreover, a PET film having the same size as the lower electrode panel 3 in its longitudinal and lateral lengths, with a thickness of 190 µm, was used, and an ITO film having a thickness of 20 nm was then formed on the entire surface of one face of the film by sputtering, and the peripheral edge portion of the ITO film was removed to prepare a transparent electrode having a rectangular shape with a wide width. Furthermore, bus bars to be disposed on the opposing two sides of the transparent electrode longitudinally and routing lines for external output from the bus bars were formed by screen-printing silver paste, so that an upper electrode sheet 2a was obtained.

Further, a PET film having the same size as the lower electrode panel in its longitudinal and lateral lengths, with a thickness of 50 µm, was used, and a decorative layer 17 having a transparent window portion on its one face was then formed by gravure printing, so that a decorative sheet 2b was obtained.

Moreover, a PET film having the same size as the lower electrode panel in its longitudinal and lateral lengths, with a thickness of 125 µm, was used, and a photocurable resin of acrylacrylate-type was applied to one surface of the film by using a roll coater to a thickness of 15 µm, and this was dried by hot wind and UV irradiation to form a semi-cured state hard coat film. Next, the semi-cured state hard coat film was pressed with an embossing mold while being heated, and a mat state was partly formed so as to be coincident with the pattern of the decorative sheet to form a mat portion 21.

Next, the face of the decorative sheet 2b on the decorative layer 17 side and the face of the upper electrode sheet 2a opposing to the transparent electrode side, as well as the face of the decorative sheet 2b opposing to the decorative layer 17 side and the face of the film 23 having the hard coat film formed thereon opposing to the hard coat film side, were respectively bonded to each other with transparent adhesives having a thickness of 0.025 mm, so that a movable sheet was obtained.

Thereafter, the lower electrode panel 3 and the upper electrode panel 2a were disposed face to face with each other, with the electrodes formed thereon respectively being separated from each other, and were bonded to each other using a frame-shaped double-sided adhesive tape with a transparent window portion and respective connecting holes being punched therefrom, and this was cut along the inner peripheral edge of the decorative layer 17.

Next, the hard coat film in the semi-cured state was completely cured by UV irradiation to form a hard coat layer 24.

Then, after an ink of a conductive adhesive was injected to the through holes penetratingly formed in the lower electrode panel 3 by a dispenser, metal pins of the FPC 10 with pins were aligned face to face with the inlets of the through holes, and by press fitting the shaft portions of the metal pins into the through holes while ultrasonic vibration and pressure were being applied to the heads of the metal pins by using an ultrasonic insert device, the respective shaft portions of the metal pins were inserted into the through holes while melting the resin forming the wall faces of the through holes formed in the lower electrode panel 3, so that a protective panel 1 was obtained.

This protective panel 1 allows touch input onto the display window of an electronic apparatus such as a cell phone, and the pattern that conceals the periphery of the transparent window portion 18 is formed into a mat state, so that it is possible to provide high-class feeling and touch that have not been achieved by the conventional protective panel with a touch input function.

### <Working Example 2>

In working example 1, after the hard coat film in a semi-cured state was partly formed into a mat state, a UV ink of a polyester acrylate-type was applied thereon by using a dispenser to form a fine concave/convex portion, for example, a convex portion (bump) 22A for use as home positions. This convex portion (bump) 22A was cured together with the hard coat film by UV irradiation used when completely curing the hard coat film. The other processes are the same as those of working example 1.

In addition to the effects of working example 1, this protective panel enables blind touch operation.

By properly combining the arbitrary embodiments of the aforementioned various embodiments, the effects possessed by the embodiments can be produced.

### Industrial Applicability

The protective panel with the touch input function for a display window of an electronic apparatus of the present invention may be used for various applications such as portable information terminals, such as PDAs or handy terminals; office automation equipment, such as copying machines or facsimiles; and smart phones; cell phones; cameras; portable game apparatuses; electronic dictionaries; car navigation systems; small-size personal computers, and various home electronics, and the fine concave/convex portion partly formed on the surface of the hard coat layer may provide various functions depending on the applications, such as functions as a home position, for reliable input on a determination key, for prevention of erroneous input, as a scroll bar, for slide opening of portable apparatuses, as camera lens, and for prevention of camera lens scratches.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A protective panel with a touch input function for an electronic apparatus display window, comprising:
a lower electrode panel (3) having, on an upper face of a non-flexible protective panel main body, a lower transparent electrode (5) and a lower circuit (7a, 7b) arranged on a periphery of the lower transparent electrode;
an upper electrode sheet (2a) having, on a lower face of a flexible transparent insulating film, an upper transparent electrode (4) arranged on a position opposite the lower transparent electrode and an upper circuit (6a-6d, 7c, 7d) arranged on a periphery of the upper transparent electrode, with the upper electrode sheet being bonded to the lower electrode panel at peripheral portions thereof to form a gap between the electrodes;
a decorative sheet (2b) that has, on at least one of faces of a flexible transparent insulating film, a decorative layer (17) provided with a concealing portion (17a) for concealing the lower circuit and the upper circuit and a transparent window portion (18) surrounded by the concealing portion, the decorative sheet being bonded to an upper face of the upper electrode sheet;
a hard coat film (2c) having a hard coat layer (24) arranged on an upper face of a flexible transparent insulating film (23), with a lower face of the transparent insulating film (23) being bonded to an upper face of the decorative sheet; and
a fine concave/convex portion (21, 22) that is partly formed on a surface of the hard coat layer.

2. The protective panel with a touch input function for an electronic apparatus display window according to claim 1, wherein the fine concave/convex portion corresponds to a mat portion (21) prepared by forming the surface of the hard coat layer into a mat state.

3. The protective panel with a touch input function for an electronic apparatus display window according to claim 1, wherein the fine concave/convex portion corresponds to a concave or convex portion (22) for use as a home position, formed on the surface of the hard coat layer.

4. The protective panel with a touch input function for an electronic apparatus display window according to claim 1, wherein the fine concave/convex portion corresponds to a concave or convex portion (22B) for use as a determination key, formed on the surface of the hard coat layer.

5. The protective panel with a touch input function for an electronic apparatus display window according to claim 1, wherein the fine concave/convex portion corresponds to a concave portion (22C, 22D, 22E, 22F) for preventing erroneous input, formed on the surface of the hard coat layer.

6. The protective panel with a touch input function for an electronic apparatus display window according to claim 1, wherein the fine concave/convex portion corresponds to a concave or convex portion (22G) for use as a scroll bar portion, formed on the surface of the hard coat layer.

7. The protective panel with a touch input function for an electronic apparatus display window according to claim 1, wherein the fine concave/convex portion corresponds to a concave or convex portion (22H) for slide-opening operation of a portable apparatus, formed on the surface of the hard coat layer.

8. The protective panel with a touch input function for an electronic apparatus display window according to claim 1, wherein the fine concave/convex portion corresponds to a protrusion (22J) for use as a lens of a camera, formed on the surface of the hard coat layer.

9. The protective panel with a touch input function for an electronic apparatus display window according to claim 1, wherein the fine concave/convex portion corresponds to a concave portion (22K) for preventing scratches on a lens of a camera, formed on the surface of the hard coat layer.

10. The protective panel with a touch input function for an electronic apparatus display window according to any one of claims 1 to 9, wherein the hard coat layer has a film thickness in a range from 7 µm to 50 µm.

11. The protective panel with a touch input function for an electronic apparatus display window according to any one of claims 1 to 9, the panel being adapted to be fitted into a panel fitting section (19a) of a casing (19) having an opening (19b) to be held such that the surface of the hard coat layer forms a same plane as a surface (19c) of the casing, the panel protectingly constructing a display (20) capable of being disposed below the panel in such a manner as to be visually recognized from an outside thereof through the transparent window portion.

12. An electronic apparatus in which: the protective panel with a touch input function for an electronic apparatus display window according to any one of claims 1 to 9, is adapted to be fitted into a panel fitting section (19a) of a casing (19) having an opening (19b) to be held such that the surface of the hard coat layer, the surface corresponding to an outer surface of the protective panel, forms a same plane as a surface of the casing, the display (20) disposed below the panel being protected in such a manner as to be visually recognized from an outside thereof through the opening of the casing and the transparent window portion of the protective panel.
